(19) Europäisches Patentamt

European Patent Office

Office européen des brevets

(11) **EP 0 901 053 B1**

(12) **EUROPEAN PATENT SPECIFICATION**

(45) Date of publication and mention
of the grant of the patent:
**04.06.2003 Bulletin 2003/23**

(51) Int Cl.⁷: **G05B 13/02**

(21) Application number: **97202729.6**

(22) Date of filing: **04.09.1997**

(54) **Method for modelling and/or controlling a production process using a neural network and controller for a production process**

Methode zur Modellierung und/oder Steuerung eines Herstellungsverfahrens, die ein neuronales Netz anwendet und Regler für ein Herstellungsverfahren

Procédé de modelisation et/ou réglage d'un procédé de fabrication utilisant un réseau neuronal et unité de commande d'un procédé de fabrication

(84) Designated Contracting States:
**BE DE ES FR GB GR IT NL**

(43) Date of publication of application:
**10.03.1999 Bulletin 1999/10**

(73) Proprietor: **Rijksuniversiteit te Groningen**
**9712 CP Groningen (NL)**

(72) Inventors:
 • **Spaanenburg, Lambert**
 **9752 NS Haren (NL)**
 • **Nijhuis, Joannes Albertus Gerardus**
 **9414 VG Hooghalen (NL)**
 • **Jansen, Walterus Johannes**
 **9717 KS Groningen (NL)**

(74) Representative:
**Smulders, Theodorus A.H.J., Ir. et al**
**Vereenigde**
**Postbus 87930**
**2508 DH Den Haag (NL)**

(56) References cited:
 • **CHIN-TENG LIN ET AL: "REINFORCEMENT STRUCTURE/PARAMETER LEARNING FOR NEURAL-NETWORK-NASED FUZZY LOGIC CONTROL SYSTEMS" IEEE TRANSACTIONS ON FUZZY SYSTEMS, vol. 2, no. 1, 1 February 1994, pages 46-63, XP000433205**
 • **PLUTOWSKI M ET AL: "SELECTING CONCISE TRAINING SETS FROM CLEAN DATA" IEEE TRANSACTIONS ON NEURAL NETWORKS, vol. 4, no. 2, 1 March 1993, pages 305-318, XP000355570**
 • **KOKI HAYASHI ET AL: "NEURO FUZZY TRANSMISSION CONTROL FOR AUTOMOBILE WITH VARIABLE LOADS" IEEE TRANSACTIONS ON CONTROL SYSTEMS TECHNOLOGY, vol. 3, no. 1, 1 March 1995, pages 49-53, XP000508610**
 • **G.TOWELL ET AL: "KNOWLEDGE BASED ARTIFICIAL NEURAL NETWORKS" ARTIFICIAL INTELLIGENCE, October 1994, NETHERLANDS, pages 119-165, XP002051395**

## Description

The present invention relates to a method for modelling and/or controlling a production process using a neural network. The invention also relates to a control system for controlling a production process.

## Introduction

The modelling and control of production processes has been pursued by various means. For centuries already the *physical model* has been developed and applied. From physical (or biological/chemical) principles, a formulation is mathematically constructed; the model is renewed and/or reformulated at every improvement of respectively the physical understanding or mathematical technique [1]. Of more recent date is the *process identification model,* where a control hypothesis is put forward and further optimized in constant comparison with reality [2]. Lately, the *operator-derived model* is posed, that directly focusses on the control actions as an experienced human operator would take [3].

The application of neural nets to derive non-linear controllers has focussed primarily on process identification [4]. This stresses the use of up-to-date process measurements and largely ignores empirical knowledge as collected by operators over time. Using artificial intelligence, controllers have been constructed that emphasize operator knowledge as collected in the past but take the nature of the process to be invariant. Attempts to blend these two approaches have sofar struck fail.

Characteristic of production processes is their constantly changing character. Therefore they are hard to abstract from fundamental chemo/physical principles and withstand a lasting precise formulation. Production data will be vague by nature, but also irreproducible. Vagenuess could be handled by fuzzy logic, but irreproducibility requires on line learning because of physical change processes. To cover both aims it is therefore required to handle such problems within the same technological frame work.

Because actual production data are scarcely available to the average academic, most research in this area is based on artificial data. As is clear from the above discussion, artificial data are essentially missing the characteristics of production data: vagueness and irreproducibility. Therefore they often lead to misleading results, proving the premises rather than solving the problem at hand. In the following we will discuss a knowledge-driven way to handle actal data. The approach has been tested in-situ and reflects therefore real problems. Further, it aims at exploiting hierarchy in both fuzzy logic and neural nets to provide for transparency.

As stated in [5], learning problems occur when vagueness causes the measurement set to not represent a function. By proper preprocessing, this can be solved but a certain spread in data values will remain. In turn, such a spread can be grasped by fuzzy rules. This is further attractive as operator knowledge can be easily introduced through the composition of many rule-blocks which in turn leads to a modular neural net fit for on-line learning.

In the following we first outline the neural net design space. We will mention some ways to blend identified and derived knowledge into a single computational structure. Then we introduce an injection technique to map multiple rule-blocks on a modular net. Lastly we discuss shortly the application of the technique in the design of neural control of production machines.

The invention will be further explained with reference to the attached drawings.

Fig. 1 shows a diagrammatical representation of the neural design space;
Fig. 2 diagrammatically shows the general development of a neural network;
Fig. 3 diagrammatically shows an example of a part of a multiple block fuzzy control system;
Figs. 4a,b diagrammatically show subnetworks of a neural network before and after injection of explicit knowledge;
Figs. 5a,b,c diagrammatically show three examples of different neural networks using implicit knowledge, preprocessing of a data set, and a modular system resp.;
Fig. 6a is a graph showing the RMS-error for the three examples of Fig. 5;
Fig. 6b is a graph showing the behavior of the three examples of fig. 5 in time;
Fig. 7 shows a diagrammatical representation similar to Fig. 1 and showing injection trajectories in accordance with the present invention;
Fig. 8 shows a graph of the relative error occurring in different methods;
Fig. 9 diagrammatically shows an example of a process to be controlled; and
Fig. 10 diagrammatically shows a fuzzy description of the process of Fig. 9.

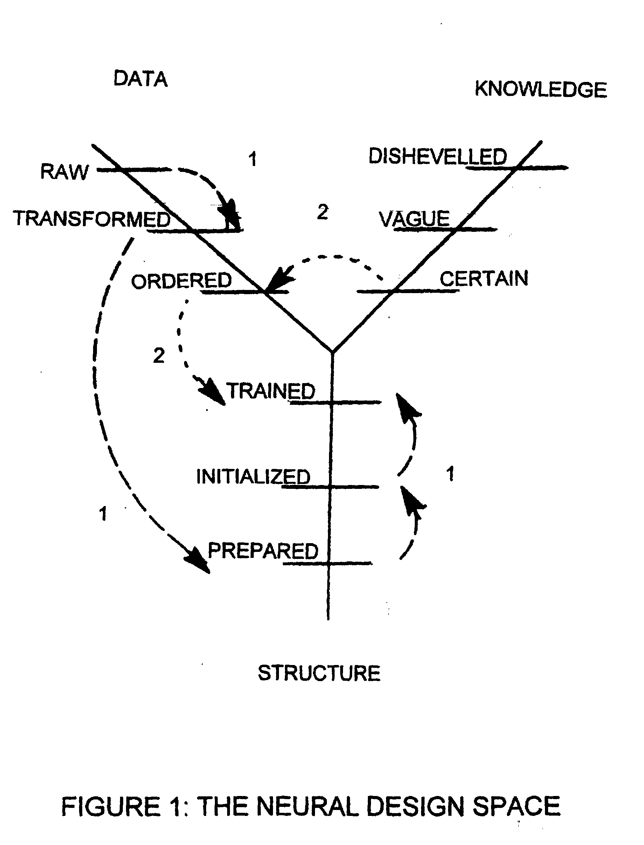

At the moment a lot of different approaches are being used to design a neural network, each of them with their own (dis-)advantages. To provide an overview, we present here a graphical representation of the design space in analogy of the Gajski-Kuhn Y-chart as has become popular over the years in the area of microelectronic design (Fig. 1).

The three ingredients of a neural design approach are (a) the existing *knowledge* foremost based on a previous analysis of the problem at hand, (b) the measured data on the actual machine and/or a reliable simulation and (c) the computational *structure.* These provide the different views on the design, as in each of these a design can be completely described. In each of these views, a number of different situations are possible. The itineraries through this landscape will then picture the different design methods (Figure 1).

In the data view, we can roughly distinguish three different grades of involvement in the overall design:

- *Raw.* The data is directly used in the training of the neural network without other than trivial signal processing.
- *Transformed.* Features are extracted from the measurement data by preprocessing. This results in a new, often reduced, dataset and serves primarily to keep the neural network to a minimal size.
- *Ordered.* Not only are features extracted but also have functional dependencies evolved that require the data to be presented in a specific order.

In the knowledge view, a similar gradation of the design components is popularized over the years. We will distinguish between:

- *Dishevelled.* There is absolutely nothing known about the problem and only by real measurements can any progress be made.
- *Vague.* All available knowledge can be described by linguistic relations. This allows to mark the area of a specific application domain.
- *Certain.* There exists a description by means of a mathematical (preferably formal) model, that at least gives the ideal situation.

How all this information flows into the final design of the neural network becomes visible in the structural view, as:

- *Prepared.* This is the most common situation, whereby the neural network structure is defined and filled with random values.
- *Initialized.* Here, the defined network is filled with precomputed initial values, that serves as a good starting point for training.
- *Trained.* The network is defined by its topology including the final weight values to model the required function.

The classical route in neural system design as popularized and matured over the last decennium starts from an elaborate pre-processing of the raw data. Hypothesized features are extracted and trained on a randomly prepared flat neural computational template. In Figure 1, this is shown by route 1.

The contrasting approach assumes a modular network of which the prepared functions are logically connected and trained by ordered data. By lack of understanding the intricacies of modular design in a learning environment, such a route (shown in Figure 1 as option 2) makes for an unreliable experiment. This has sofar blocked its application in practice.

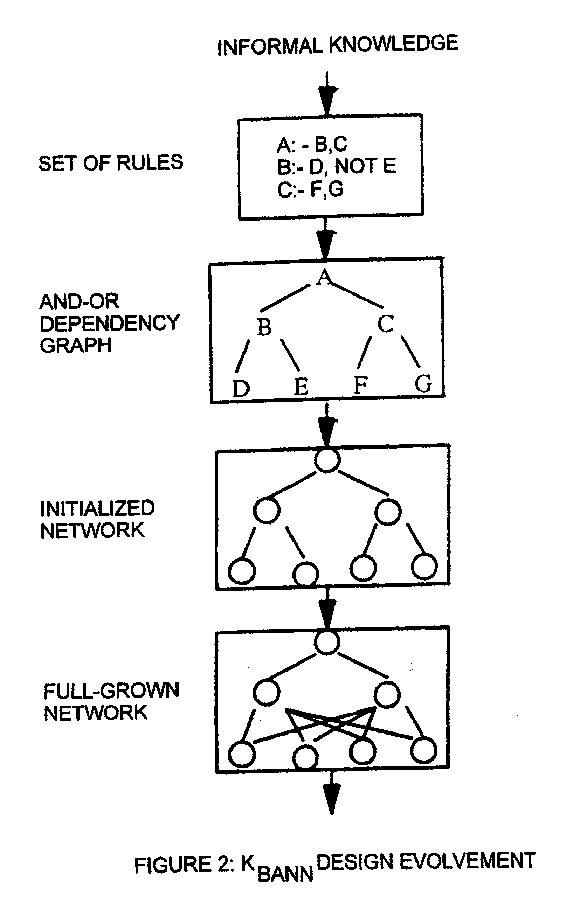

A number of techniques, that involve the direct use of knowledge have been put forward. Noteworthy is the $K_{BANN}$ method, that aims to generate a neural network from a formal specification [6], see Figure 2.

The first step in this procedure is the translation of the initially available informal knowledge into a set of rules. There are some restrictions on the way this set of rules is represented. All rules have to be expressed as Horn Clauses. Rules can involve binary, numeric or order data. Disjuncts have to be avoided, so all rules with more than one conjunct are rewritten. For instance, the rule X with two conjuncts

```
X:-A,B
X:-C,D
```
is rewritten to four rules with two intermediate variables
```
X:-X'
X:-X"
X':-A,B
X":-C,D
```

During the second step all available rules are placed into an NAD-OR dependency graph, that basically sets the number of layers of the MLP network to be created. In the third step this dependency graph is used to actually create the MLP neural network. Each variable is replaced by a neuron and each dependency is changed into a connection. Note that at this point the MLP network is only partially connected. Next, each weight value of each connection is initialized according to the set of rules. Lastly, extra connections between neurons in adjacent layers are added to reach full connectivity between two adjacent layers.

This process results in a MLP neural network with fixed connections and biases on the one hand and with randomly initialized connections on the other hand. Therefore a learning algorithm is needed that can deal with pre-initialized values. When, during the training of the network a pattern is presented that is completely new for the network and no likeness with the initial rule set, a large error will emerge and can be propagated back through the network, causing considerable changes to all weights and biases, including the fixed ones. This causes the destruction of the initialized domain knowledge and seriously hampers quick training. To avoid these problems a cost function is applied on basis of a cross-entropy error rather than the mean squared error.

Though several successful applicationsd of $K_{BANN}$ have been reported in literature, a number of deficiencies have become clear. When the pre-knowledge is incomplete, the performance of the learning drops below the performance of ordinary trained networks. Further, the formal specification is restricted to only a set of Horn clauses. Due to the unpredictable and irreproducible changing of the internal values, the final result is hard to explain. In other words, the final network is not to be explained from the initial knowledge.

In the sequel, we will propose a modular construction technique, that aims to solve a number of the above problems. Like $K_{BANN}$ it is based on a direct mapping of logic rules onto a neural structure, but uses a more gradual way to merge knowledge and data within the single computational template. As a result, the neural information keeps in correspondence to the logic rules and therefore allows a direct interpretation followed by a reliable and reproducible on-line learning.

## Capturing operator knowledge

A primary requirement on the relation between measurement set and neural network is *learnability*. In case of a feedforward classifier, this means the existence of a function such that each output value is uniquely related to an input vector. If the dimensionality and/or domain of the input vector is not already rightfully given by the measurement procedure, a separate preprocessing is required. Often this spurs to a different domain representation. The lack of function definition can be easily seen from the graphical input/output relations. Where a wide spread of input vectors corresponds to a single output value, such a lack of function definition is clearly present. Where the spread is small, the cause will presumably be a degree of noise on or reproducibility of the process. Such a vagueness must be handled separately.

If the variation is only with respect to the input vector, the subsequent neural network can easily cope with it. But if the variation involves also the output value, a further clustering is called for. This can be achieved in a number of ways, such as:

- *statistics.* By a number of statistical measures, a representative value for the output value can be determined and the input vector is correspondingly adjusted. This can be performed off- and on-line [7].
- *fuzzy logic.* The input/output relation can be grasped in fuzzy rules. Output values can be produced from several input vectors and are assumed to be members of the respective clusters to a degree.
- *self-organization.* Clustering can also be performed through the winner-takes-all mechanism as available in a number of self-organizing neural networks.

In general, it is hard to relate the objectives of the clustering mechanism to the needs of the neural classification. Under circumstances a degree of supervision (or manual editing) remains required to achieve a quality result. This indicates the need for using explicit knowledge on the process characteristics, which leaves the question of how to handle this in a structured way.

Where expert system technologies rely solely on a detailed knowledge acquisition, neural network technology seems to rely on the capturing of measurements. Crossing the gap between these two is the fuzzy logic technology leading to such cross-fertilizations as fuzzy expert systems and fuzzy neural nets. In fuzzy logic the global behavior can be captured in some general rules and where more detail is required the rules will simply become numerous and more detailed. A literature search has revealed that most published controllers are based on one set (or block) of rules; some use three rule-blocks.

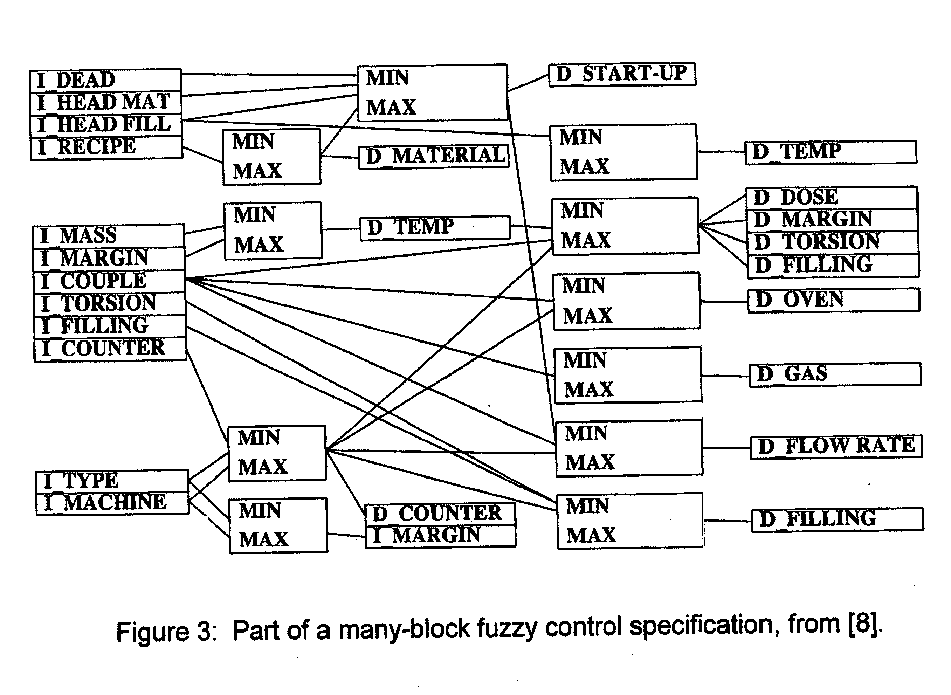

With so few rule-blocks it stands to reason that the knowledge structure is not visible in the block structure. This lack of hierarchy makes it hard to maintain or understand. We have therefore experimented with hierarchical rule-blocks: a tree-wise arrangement of many small rule-blocks. Leaf blocks contain rules that operate directly from the measured data; conglomerate blocks operate on the results of leaf and/or conglomerate blocks. The knowledge is then represented by a tree of blocks that explicitly display the reasoning of the operator to perform his control actions. This structure can be visually inspected for first-glance correctness and also executed on any sophisticated fuzzy simulator (Figure 3).

Realistic controllers require 10-25 rule blocks of average 10 rules. A small-scale example is described in [9].

Here, the optimized control of a float-glass production furnace is developed on basis of 6 rule-blocks for a total of 297 knowledge rules using 85 fuzzy terms. The largest project developed thus far is a controller for a PVC-extruder and requires 26 blocks. In both cases the interactive acquisition of operator knowledge was crucial for the acceptance of the project results.

By interviewing techniques the setting of the leaf blocks can usually be accurately determined. The precision becomes less when moving further along the reasoning structure. The further one gets into the realm of strategic decisions, the more the emotional preferences of the operator show. Hence to achieve an accurate control it is required to train the conglomerate settings in relation to the positioning of the leaf blocks. This can be achieved neurally, if a suitable technique can be found to handle training functions within an otherwise untrained control net.

**Introducing operator-knowledge**

The introduction of operator-knowledge during a neural development phase is advantageous for a number of reasons. Of high practical importance is the fact that it earnestly aids the introduction of the neural solution in the factory. A next issue is that the amount of relevant measurements is usually too little to have statistical significance and learning will then require to bring in other knowledge sources also. A third reason is that it helps to understand and explain the learning and the operation of the net. Sofar the introduction of operator knowledge has been hard in neural nets. Several approaches have been tested to reach this ideal:

- *learning by hints*. Here the measurement set is selectively sampled to teach the network from explicit knowledge the way in which the implicit knowledge must be unravelled. This research area has close links to A.I. and appears in a number of variations [10].
- *learning by control*. The network parameters are predetermined from the explicit knowledge so that the sampling of implicit knowledge will have a directed effect. In special cases, such as fuzzy/neural networks, this also requires additional control elements called guards within the network [11].
- *learning by dedication*. The network topology is structured into individually trained, re-usable parts that implement the features as reflected by the explicit knowledge. It is anticipated that the overall network will use the implicit knowledge from the measurements to expand this pre-arranged wisdom [12].

The latter approach has some obvious advantages as it assumes no changes to the learning algorithm. The same (standard) approach can be used for all system parts as well as for the system as a whole. This makes the paradigm compatible with object-oriented design and thereby opens the way for a realistic software support. Nevertheless it has always been less popular because of the lack of instruments to eliminate conflicts in learning that could result in a training stand-still or even a complete wipe-out.

When a neural network is trained without pre-knowledge, its parameters are initialized by a random selection of small values to make sure that there are no built-in preferences. When a fully trained part is attached to an otherwise empty network, this will lead to a local perturbation. When elsewhere in the empty network a certain set of features grows, this happens at such a pace that the local perturbation will be annihilated. The logical way to block this process is by a very low learning rate $\lambda$ to make sure that the pace of potential destruction is severely lowered. In practice one often cites values for $\lambda$ below 0.02 which makes for very slow learning.

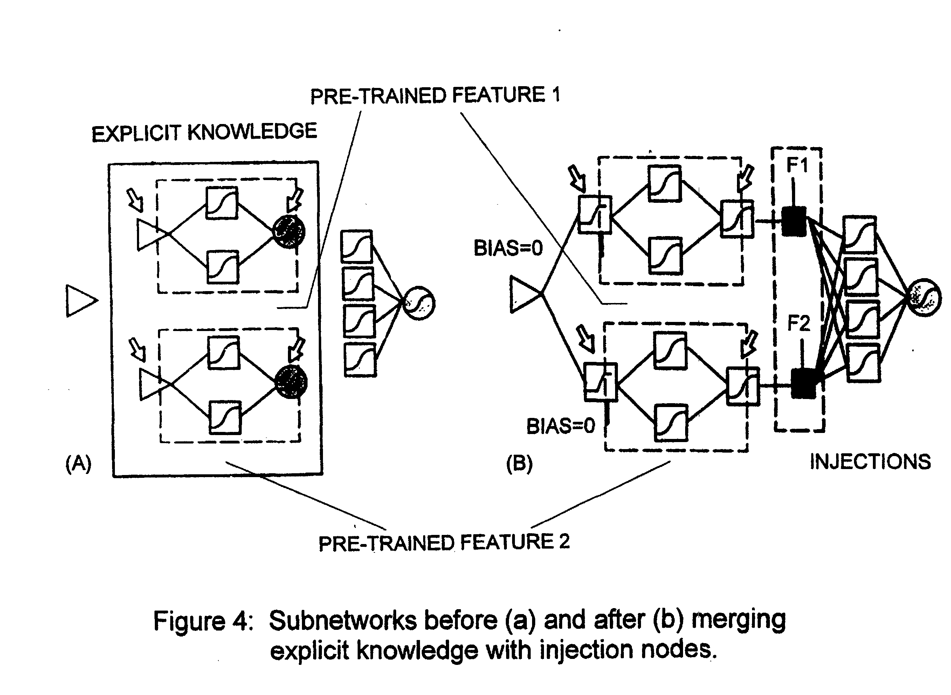

Instead of actually assembling learned parts to a whole, we will attempt to inject functions on the hidden neurons in the overall untrained net (Figure 4). To this purpose, an injection node IN is used that arbitrates between the injected function and the untrained subnetwork that will eventually house the function. The overall neural network is trained by a classical error back-propagation algorithm with slight modifications. During the forward pass, the network inputs are flowing toward the outputs. Here the injection nodes are virtually cut so as to inject the function value instead of the propagated input.

During the backward pass, the actual and the anticipated output values are compared and the difference is passed back as an error to adjust lower-order weights. This happens for the network outputs as well as for the subnetwork outputs. From the above discussion follows that we see the injection nodes as cut-points, where we train the subnetwork to provide the given function and the overall network to consume the given function. Only when the produced and the consumed values are in accordance can we remove the temporary isolation by the injection node.

This then leads to the following procedure to train a network by controlled dedication:

Step 1: [*extract from datafile*] For each subdomain, we extract the corresponding part of the training set and personalize a small neural network to the required local function.

Step 2: [*normalize knowledge*] For each local network we analyze the behavior to extract the approximating function. This step is not absolutely necessary but allows for a further compression of the overall training set and/or for a compressed off-line storage of engineering knowledge as usable for other projects.

Step 3: [*inject knowledge*] The overall network is coarsely trained by injecting the function and using the compressed training set. The network will perform for the domain and might not be optimal for a specific process.

Step 4: [*personalize]* The overall network is further personalized with the original training set. As indicated before, the move from step 3 to 4 has still to be done with some care when the approximation of the subfunctions is not ideal.

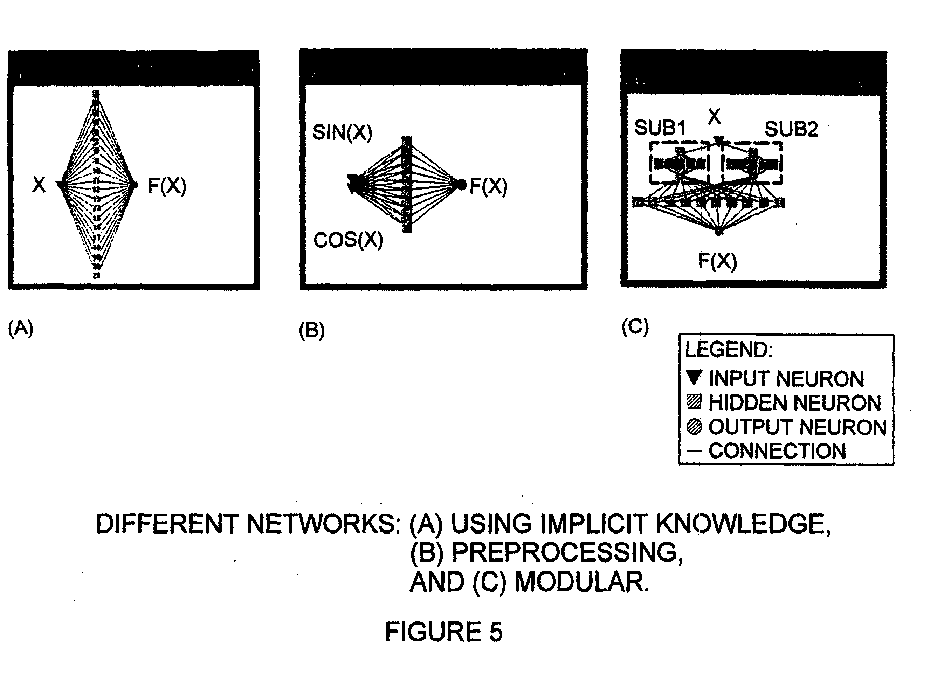

To illustrate our modular design approach we will compare it with two other commonly used approaches (Figure 5). This is illustrated by the approximation of the function $\sin(x)*e^{-\cos(x)}$, which is a simplification of frequently occurring physical test situations, for instance measured shock signals in automotive applications.

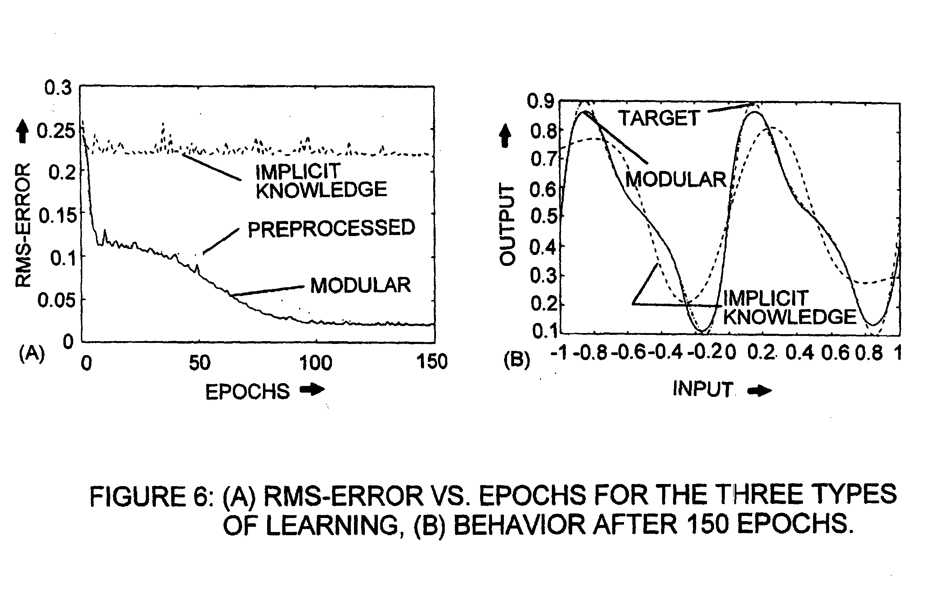

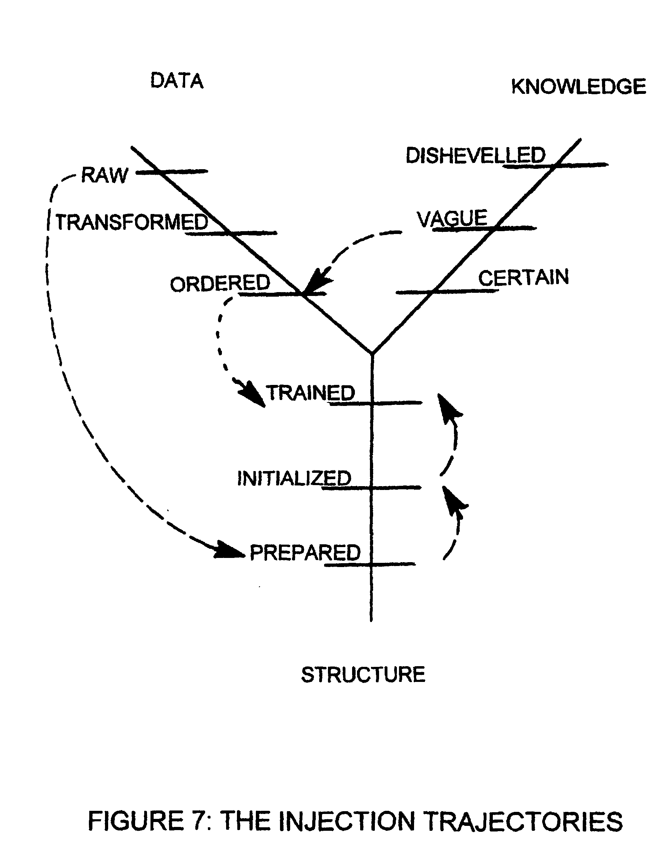

The structure of Figure 5a only uses the *implicit knowledge* of the data set. It contains 20 hidden neurons and uses a standard backpropagation learning algorithm with learn rate 0.7 and momentum 0.2. When the structure of Figure 6a is used, no satisfactory result is obtained. The RMS-error found for the first 150 epochs is plotted as a dashed line in Figure 7a, the resulting network output after 150 epochs is plotted as a dashed line in Figure 7b. After 1000 epochs the RMS-error over the train data is still 0.22 indicating severe learning problems using this approach.

In Figure 5b the data set is preprocessed using the functions $\sin(x)$ and $\cos(x)$. The choice of these two functions is based on their appearance in the target function *(explicit knowledge)*. The number of hidden neurons is reduced to 10 and the learning algorithm is kept equal to the previous experiment. The dotted line in Figure 7a represents the RMS-error over the train data at every epoch when the structure of Figure 6b is used. Here the target function is better approximated.

In the last structure as shown in Figure 5c both the preprocessing functions are trained off-line into two separate subnetworks, then the functions are extracted and injected into an overall network. Both subnetworks are trained until their individual RMS-error over the training set becomes smaller than 0.02. The hidden layer of the overall network contains 10 neurons and uses the same learning algorithm as before. The solid line in Figure 6a shows the RMS-error of the modular network, as shown in Figure 5c. This structure shows slightly faster learning compared to the preprocessed approach.

**Integrating operator-knowledge**

The neuro-fuzzy controller [13] and the fuzzy neural network [14] have been extensively applied to the design of industrial controllers. In the first case, the fuzzy rules provide for direct actions but can be adapted by a neural monitor for long-term changes. In the latter case, the fuzzy rules are initialized within a multi-layer neural network using specialized neurons. In both cases, the hierarchy in the knowledge structure can be hardly accommodated for. We desire therefore to merge the major alternatives, as sketched in Figure 1, into a single method using the available knowledge and data simultaneously (Figure 7).

In comparison with $K_{BANN}$ we have solved a number of problems, that sofar blocked the application in real-life:

- by using fuzzy logic, there is no restriction on the formal specification of the operator knowledge;
- by using multiple rule-blocks, a full coverage of the problem area can be easily enforced;
- by using injection, the changing of the internal values has become predictable and reproducible.

The technique of knowledge injection allows us to keep the both disciplines separate. First we preprocess the data to ensure learnability. Then we model the operator knowledge by a hierarchical structure of many rule blocks and thus ensure a reasonable feedback to the operator himself. The fuzzy rule-blocks are then transformed to a neural network and post-trained with measurement data to personalize for the specific machine characteristics. In other words, we have achieved a fuzzy implementation and a neural realization of the non-linear controller with a strict correspondence that ensures the interpretation of the controller (mis-)behavior.

In the fuzzy specification, the accuracy of the data rapidly deteriorates while going from leaf- to conglomerate blocks. For the knowledge injection, we use at least the information from the leaf rule-blocks but sofar no algorithmic manner has been found to establish a precise measure to determine which conglomerate rule-blocks can be used as functional information and which ones as structural information. At the moment, the division is made by trial-and-error by adding rule-blocks to the initializing function set till the neural network succeeds in learning.

Once the neural network is trained, this reflects a momentary glimpse on the production machine. In practice things change over time. It is therefore of interest to apply on-line learning during the operation of the machine [15]. Hereby, a limited measurement set is used to constantly monitor and adapt the previously trained neural network. In the neural fuzzy controller this approach is limited to the parameters of the membership functions. In our case, such an assumption has not been imposed and the neural network can learn beyond the limits of the operator knowledge.

This is on one hand an advantage as it allows to extrapolate beyond the realm of operator knowledge. On the other hand it is a disadvantage as it fills such gaps without any warning. This may potentially lead to hazardous situations. It is therefore required to interview the operator not only on the desired functionality but also on the undesired misbehavior. Eventually measures are needed to ensure that such areas will never be entered [16]. Such a robustness mut be proven before the neural controller is allowed for autonomous operation, if ever. At the moment, injection-based design are still applied to aid rather than to replace the operator.

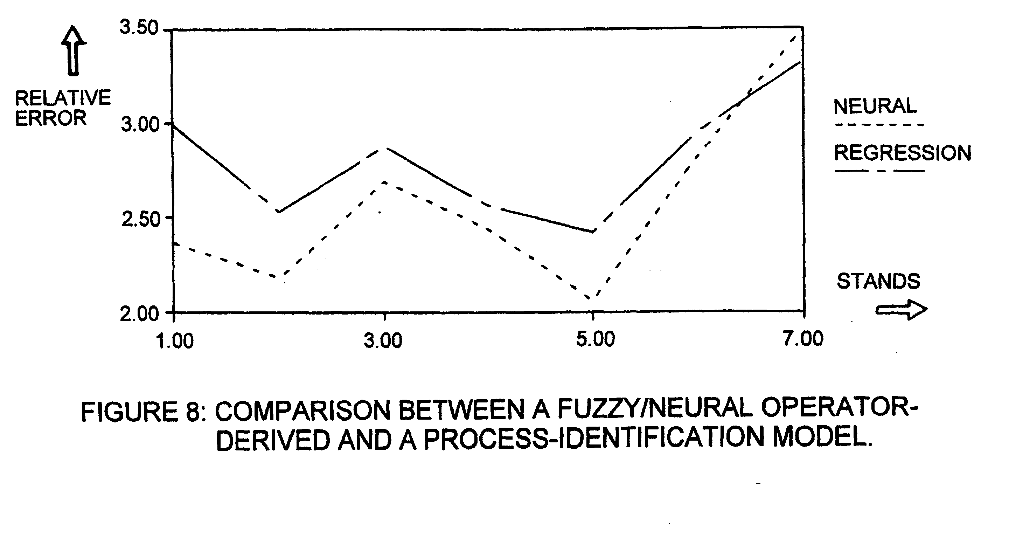

It is finally of interest to see whether the proposed technology does improve standard technique. To this purpose, we have performed some experiments with an existing control based on regression analysis. We find that the presented methodology does not only have advantages in development time and transparency, but also offers a slightly improved behavior (Figure 8).

## AN APPLICATION

Spot welding is a technique, widely used in the automobile and aircraft industry, to connect two or more metal sheets. The large amount of welds produced at high speed require a strict process control to maintain weld quality. Until recently monitoring was accomplished by destructive testing of samples, because of the high costs involved. A more economic method for monitoring spot weld quality is by ultrasonic testing: a nondestructive test technique in which an experienced operator evaluates the weld quality by applying a sound wave to the weld and observing the echo wave form on an oscilloscope.

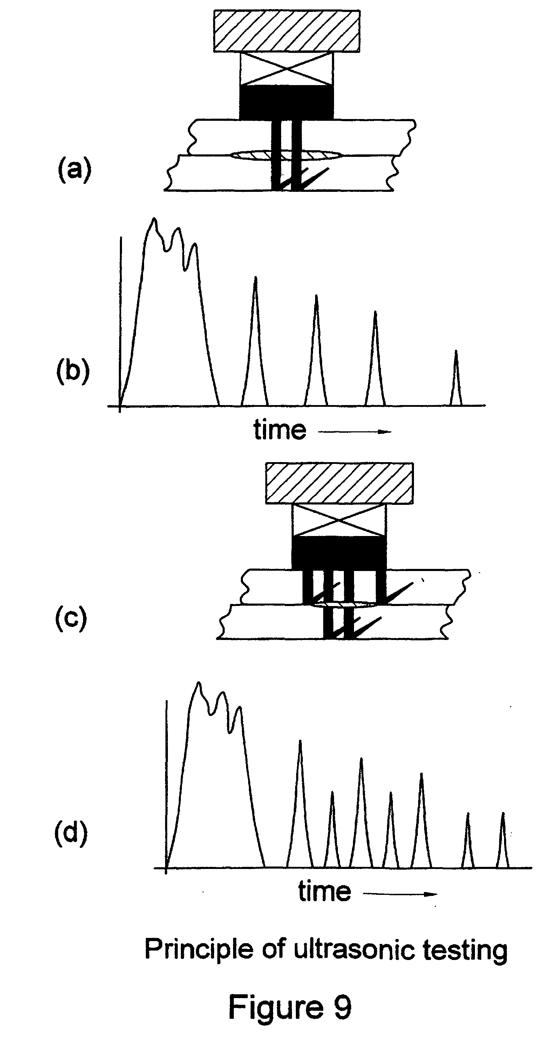

Ultrasonic testing is performed by putting a handheld transducer over the spot weld and transmitting a high frequency wave into the welded joint. This wave is echoed back and forth between the air/metal interfaces. The echoes that occur at the outer surface of the uppermost metal sheet are received by the same transducer and displayed as a time-amplitude signal on the oscilloscope. A typical signal taken from a weld with a diameter larger than the diameter of the transducer is presented in Figure 9b.

This signal shows an echo train with attenuating amplitudes. For undersized welds, echoes arise between the normal echoes (see Figure 9d) due to reflections occurring at the air interface between the two sheets: these are called the *intermediate echoes,* in contrast to the *main echoes.* This difference in signal response facilitates to distinguish between adequate and undersized welds.

We have examined a total of 12 features. Each feature is extracted from the set of main peak amplitudes $M_j$; $j \in J$ and the set of intermediate peak amplitudes $I_j$; $j \in J'$. The ranges of index sets J and J' respectively are [1,N] and [1,N-1]. The constant N is defined as the smallest integer n for which each peak $M_j$; $j \in [1,n]$ is larger than a certain threshold.

The sequence M of main peak amplitudes should behave like an exponential function:

$$M_j = c.e^{-\lambda j}; \, j \in J; \, c, \, \lambda \in R \tag{1}$$

The attenuation is caused by grain scattering. The grains scatter ultrasonic energy out of the coherent beam, causing the echoes to muffle. Since the amplitude of the peaks strongly depends on the angle between the probe and the metal sheet, the amplitudes of the main and the intermediate peaks vary from one signal to another, yielding different sequences M and I for the same weld. In order to decrease the influence of these effects, a linear scaling of I is performed, using factors s and c yielding the sequences $I^s$ and $I^c$. The constant s is the amplitude of the first main peak $M_1$ and c is the constant in (1).

In the following we will discuss 3 features in more detail. Due to disturbances caused by noise and a limited precision of the measurement equipment, the sequence M does not exactly behave like a first order exponential function. Therefore, the constants c and $\lambda$ are found by a least means square exponential fit of the sequence M.

The first feature under consideration measures the energy in the intermediate peaks relative to the energy in the main peaks:

$$F_a = \sum_{j \in J'} I_j \, / \sum_{j \in J} M_j$$

Using the exponential fit of the sequences M and $I_j$ this can be interpreted as a comparison between the respective shape coefficients $\lambda_M$ and $\lambda_I$. Another possible feature, called $F_6$, denotes the maximum of $I^s$ or in formula: $F_6 = \max (J^s_j)$; $j \in J'$. On closer inspection, this shows to be the normalization of the previous comparison using $c_M$ and $c_I$. Finally, feature $F_8$ denotes the mean amplitude of the scaled intermediate peaks:

$$F_8 = \sum_{j \in J'} \bar{I_j^c} \,/\, (N-1)$$

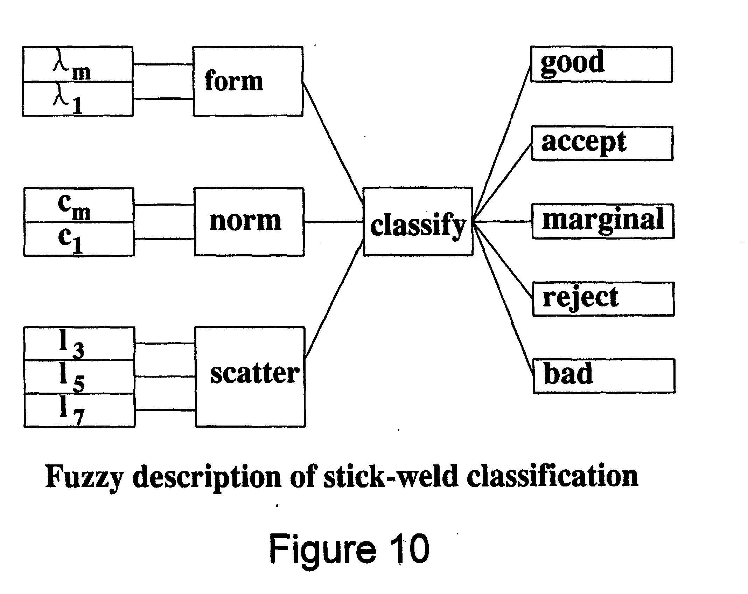

This is of importance, when the intermediate peaks are not of an exponential function. This is caused by scattering on an irregular shaped weld and can still indicate an acceptable weld. We therefore come to the multiple rule-block description using fuzzy logic, as shown in Figure 10.

Injecting this knowledge into a neural network has to be done with extreme care as a number of conflicts are still present. However, dominance is soon achieved and adaption to the real-life data can be comfortably accomplished.

**DISCUSSION**

A neural network is to copy by learning the behavior of a measured process. In practice, the lack of measurements can be compensated by existing knowledge. We have essentially split the problem of knowledge fusion into two parts. In the first part, we aim to note implicit and explicit knowledge in the trainset. This makes it small and transparent, but most important we arrive at a uniform notation. In the second part, we aim to inject this knowledge into the network. Here, no separate handling of implicit and explicit knowledge is required anymore. Further, we avoid the learning problems usually encountered in modular assembly.

The injection technique is based on conventional neuro-engineering, and differs mainly in the way knowledge is introduced to the network. Its elegance is apparent in the observation that in case of processes for which already much knowledge exists, the compressed trainset shows transparently the non-linear composition for applications, where the net has to be implemented in an analytical way.

Production data are generally not well-defined nor stable. Moreover, it is hard to perform sufficient measurements. The first reason is the *homing problem:* how to bring a production machine in exactly the same state as before acting on the same material in the same manner. Despite the fact that sometimes enormous data sets are available, there is no certainty with respect to the machine status. The second reason is the price tag connected to make specific experiments simply for modelling.

We have discussed here a structured approach to handle real data using a mixture of fuzzy logic and neural networks. Fuzzy neural networks are discussed widely in literature [14]. They represent a basic method to insert fuzzy knowledge into neural networks, later extended for stochastic clustering [7]. They represent a more general methodology, that strives to transform a formal description into a reasonably well-defined network. In this more general setting, such techniques have found little acceptance. Without restrictions to the network composition, a further training using actual data may easily lead to disorientation with respect to the embodied knowledge.

Here we take a different road, using fuzzy rules as one of the many ways to represent knowledge and to inject this knowledge during the training of the neural network together with the actual measurements. We find that the implied exploitation of modularity has many things to be praised for. Among other things, it is found to be robust and reproducible and lends itself transparently to an easy interpretation and documentation. This makes it very suitable for the non-linear control and diagnosis of production processes.

**References**

[1]  L. Ledermann and D. Teresi, "The God Particle" (Houghton Mifflin Cy., Boston, 1993).

[2]  L. Ljung, "System Identification: Theory for the User" (Prentice-Hall, New York, 1987).

[3]  J.H. Lim, H.C. Lui and P.Z. Wang, "A framework for integrating fault diagnosis and incremental knowledge acquisition in connectionist expert systems", *Proceedings* 10th Nat. *Conference on AI* (San Jose, 1992) pp. 159-164.

[4]  K.S. Narendra and K. Parthasarathy, "Identification and Control of Dynamical Systems Using Neural Networks", *IEEE Transactions on Neural Networks 1,* No. 1 (1990) pp. 145-158.

[5]  M.H. ter Brugge et al., "On the representation of data for optimal learning", *Proceedings* ICNN' 95 *VI* (Perth, Western Australia, November 1995) pp. 3180-3184.

[6]  G. Towell and J.W. Shavlik, "Knowledge-based artificial neural networks", *Artificial Intelligence* 70, No. 1-2 (1994) pp. 119-165.

[7]  R.A. Jacobs and M.I. Jordan, "A competitive modular connectionist architecture", *Advances* in *Neural Information Processing Systems. 3, pp.* 767-773.

[8]  J.K. Kok, H. TerHaseborg, and J.A.G. Nijhuis, "Fuzzy opstarten PVC-Extruder" (in Dutch), *Internal Report HS-97-01* (Impacts, Groningen, 1997).

[9]     L. Spaanenburg, H. TerHaseborg, and J.A.G. Nijhuis, "Fuzzy diagnosis of float-glass production furnace", pp. 197-206, in: (Reusch, B) "Computational Intelligence: Theory and Applications", *Lecture Notes in Computer Science 1226* (Springer Verlag, Berlin 1997).

[10]    M. Plutowski and H. White, "Selecting Concise Training Sets from Clean Data", *IEEE Trans.* on *Neural Networks 4*, No. 2 (March 1993) pp. 305-318.

[11]    C.T. Lin and C.S.G. Lee, "Reinforcement structure/parameter learning for neural network based fuzzy logic control system", *IEEE Trans. on Fuzzy Systems 2,* No. 1 (February 1994), pp. 46-63.

[12]    T. Hrycej, *Modular learning* in *neural networks* (John-Wiley, 1992).

[13]    K. Hayashi et al., "Neuro fuzzy transmission control for automobile with variable loads", *IEEE Transactions on Control Systems Technology* 3, No. 1 (March 1995) pp. 49-53.

[14]    R. Masuoka et al., "Neuro Fuzzy System - Fuzzy Inference Using a Structured Neural Network", *Proc. Int. Conf. On Fuzzy Logic* (Iizuka, Japan, 20-24 June 1990), pp. 173-177.

[15]    V. Ruiz de Angulo and C. Torres, "On-line learning with minimal degradation in feedforward networks", *IEEE Transactions on Neural Networks 6,* No. 3 (May 1995) pp. 657-668.

[16]    J.A.G. Nijhuis, M.H. ter Brugge, J.K. Kok, and L. Spaanenburg, "Handling unseen data in a neural license plate recognition system, *to* be *presented at EUFIT' 97* (Aachen, 1997).

## Claims

1.    A method for modelling and/or controlling a production process using a neural network comprising the steps of

   a. obtaining explicit knowledge about the process to be modelled or controlled from at least one expert operator;
   b. translating said explicit knowledge into a description based on fuzzy logic to obtain fuzzy logic knowledge, said description being structured in a modular manner and including a large number of small blocks of knowledge rules;
   c. providing a neural network structured in a manner corresponding to the modular structure of the fuzzy logic description of step b, said neural network including a large number of small subnetworks;
   d. injecting the fuzzy logic knowledge obtained in step b generally simultaneously in the subnetworks;
   e. obtaining measured data relating to the process;
   f. entering said measured data relating to the process into the fuzzy logic description of step b and into the neural network;
   g. training the neural network further on measured data.

2.    A method as claimed in claim 1, wherein injection nodes are provided in the neural network to inject desired functions in untrained subnetworks of the neural network.

3.    A method as claimed in claim 1 or 2, wherein at least one subnetwork is trained separately off-line with preprocessed data using a predetermined function.

4.    A method as claimed in claim 3, wherein said at least one subnetwork is trained until its error is smaller than a predetermined value, whereupon the function is extracted and injected into an overall network.

5.    A method as claimed in any one of claims 1-4 further comprising the step of controlling the process on the basis of the output of the neural network.

6.    A controller for a production process, said controller comprising a neural network obtained and provided with information in accordance with any one of claims 1-5.

## Patentansprüche

1.    Verfahren zum Modellieren und/oder Steuern bzw. Regeln eines Produktionsprozesses, welcher ein neurales Netzwerk benutzt, umfassend die Schritte

   a. Erhalten von explizitem Wissen über den Prozess, welcher modelliert oder gesteuert bzw. geregelt wird, von mindestens einem Expertenbediener;
   b. Übersetzen des expliziten Wissens in eine Beschreibung, basierend auf Fuzzylogik, um Fuzzylogikwissen zu erhalten, wobei die Beschreibung in einer modularen Art strukturiert ist und eine große Zahl von kleinen Blöcken von Wissensregeln beinhaltet;

c. Vorsehen eines neuralen Netzwerks, welches in einer Art entsprechend der modularen Struktur der Fuzzylogikbeschreibung von Schritt b strukturiert ist, wobei das neurale Netzwerk eine große Zahl von kleinen Sub- bzw. Untemetzwerken beinhaltet;

d. Einspeisen des Fuzzylogikwissens, welches in Schritt b erhalten wurde, im wesentlichen simultan in die Subnetzwerke;

e. Erhalten von gemessenen Daten bezüglich des Prozesses;

f. Eingeben der gemessenen Daten, welche sich auf den Prozess beziehen, in die Fuzzylogikbeschreibung von Schritt b und in das neurale Netzwerk;

g. Trainieren des neuralen Netzwerks weiter mit gemessenen Daten,

**2.** Verfahren nach Anspruch 1, worin die Einspeiseknoten in dem neuralen Netzwerk vorgesehen sind, um die gewünschten Funktionen in untrainierte Subnetzwerke des neuralen Netzwerks einzuspeisen.

**3.** Verfahren nach Anspruch 1 oder 2, worin mindestens ein Subnetzwerk separat off-line mit vorprozessierten Daten durch Nutzen einer vorbestimmten Funktion trainiert wird.

**4.** Verfahren nach Anspruch 3, worin das mindestens eine Subnetzwerk so lange trainiert wird, bis sein Fehler geringer ist als ein vorbestimmter Wert, auf welchem die Funktion extrahiert wird und in das Gesamtnetzwerk eingespeist wird.

**5.** Verfahren nach einem der Ansprüche 1 bis 4, weiter umfassend den Schritt des Steuerns bzw. Regelns des Prozesses auf der Basis der Ausgabe des neuralen Netzwerks.

**6.** Controller bzw. Steuer- bzw, Regelgerät für einen Produktionsprozess, wobei der Controller ein neurales Netzwerk umfaßt, welches erhalten und versehen ist mit Informationen gemäß einem der Ansprüche 1 bis 5.

**Revendications**

**1.** Procédé de modélisation et / ou de réglage d'un procédé de production utilisant un réseau de neurones comprenant les étapes consistant à :

a. obtenir une connaissance explicite sur le procédé à modéliser ou régler par au moins un opérateur expert ;

b. traduire ladite connaissance explicite en une description sur la base de la logique floue pour obtenir une connaissance en logique floue, ladite description étant structurée d'une manière modulaire et comprenant un grand nombre de petits blocs de règles de connaissances ;

c. prévoir un réseau de neurones structuré d'une manière correspondant à la structure modulaire de la description en logique floue de l'étape b, ledit réseau de neurones comprenant un grand nombre de petits sous-réseaux ;

d. injecter la connaissance en logique floue obtenue à l'étape b, généralement simultanément dans les sous-réseaux ;

e. obtenir les données mesurées concernant le procédé ;

f. entrer lesdites données mesurées concernant le procédé dans la description en logique floue de l'étape b et dans le réseau de neurones ;

g. entraîner le réseau de neurones en utilisant en outre les données mesurées.

**2.** Procédé selon la revendication 1, dans lequel des noeuds d'injection sont prévus dans le réseau de neurones pour injecter les fonctions souhaitées dans les sous-réseaux non entraînés du réseau de neurones.

**3.** Procédé selon la revendication 1 ou 2, dans lequel au moins un sous-réseau est entraîné séparément de manière autonome avec les données pré-traitées en utilisant une fonction prédéterminée.

4.  Procédé selon la revendication 3, dans lequel ledit au moins un sous-réseau est entraîné jusqu'à ce que son erreur soit inférieure à une valeur prédéterminée, moyennant quoi la fonction est extraite et injectée dans un réseau global.

5.  Procédé selon l'une quelconque des revendications 1 à 4, comprenant en outre l'étape consistant à régler le procédé sur la base de la sortie du réseau de neurones.

6.  Régulateur destiné à un procédé de production, ledit régulateur comprenant un réseau de neurones obtenu et présentant les informations selon l'une quelconque des revendications 1 à 5.

DATA

KNOWLEDGE

RAW

1

DISHEVELLED

TRANSFORMED

2

VAGUE

ORDERED

CERTAIN

2

TRAINED

INITIALIZED

1

1

PREPARED

STRUCTURE

FIGURE 1: THE NEURAL DESIGN SPACE

FIGURE 2: $K_{BANN}$ DESIGN EVOLVEMENT

Figure 3: Part of a many-block fuzzy control specification, from [8].

Figure 4: Subnetworks before (a) and after (b) merging explicit knowledge with injection nodes.

EP 0 901 053 B1

(A)

(B)

(C)

EP 0 901 053 B1

LEGEND:
▼ INPUT NEURON
▨ HIDDEN NEURON
◉ OUTPUT NEURON
— CONNECTION

DIFFERENT NETWORKS: (A) USING IMPLICIT KNOWLEDGE,
(B) PREPROCESSING,
AND (C) MODULAR.

FIGURE 5

FIGURE 6: (A) RMS-ERROR VS. EPOCHS FOR THE THREE TYPES OF LEARNING, (B) BEHAVIOR AFTER 150 EPOCHS.

EP 0 901 053 B1

FIGURE 7: THE INJECTION TRAJECTORIES

FIGURE 8: COMPARISON BETWEEN A FUZZY/NEURAL OPERATOR-
DERIVED AND A PROCESS-IDENTIFICATION MODEL.

(a)

(b)

time ——→

(c)

(d)

time ——→

Principle of ultrasonic testing

Figure 9

**Fuzzy description of stick-weld classification**

# Figure 10

EP 0 901 053 B1